# EUROPEAN PATENT SPECIFICATION

(11) **EP 2 341 995 B1**
(45) Date of publication and mention of the grant of the patent: **13.12.2017**
(21) Application number: 09829525.6
(22) Date of filing: 29.09.2009
(51) Int. Cl.: B01D 1/00, B01D 1/28, B01D 3/00, B01D 3/32, B01D 3/42

(54) **IMPROVED HEAT PUMP FOR HIGH PURITY BOTTOM PRODUCT**
VERBESSERTE WÄRMEPUMPE FÜR EIN HOCHREINES SUMPFPRODUKT
POMPE A CHALEUR AMELIOREE POUR PRODUIT DE FOND DE HAUTE PURETE

(30) Priority: 27.10.2008 US 258920
(43) Date of publication of application: 13.07.2011
(73) Proprietor: UOP LLC, Des Plaines, Illinois 60017-5017 (US)
(72) Inventor: SECHRIST, Paul, A., Des Plaines, Illinois 60017-5017 (US); WEGERER, David, A., Des Plaines, Illinois 60017-5017 (US)
(74) Representative: Boult Wade Tennant
(86) International application number: PCT/US2009/058726
(87) International publication number: WO 2010/062462

(56) References cited:
- EP-A1- 0 010 253
- EP-A1- 0 593 873
- DE-B- 1 114 168
- FR-E- 70 198
- US-A- 3 813 890
- US-A- 4 539 076
- US-A- 4 615 769
- US-A- 5 124 004
- US-A1- 2006 006 054

## Description

### FIELD OF THE INVENTION

This invention relates to the separation of hydrocarbons. Specifically, the invention relates to improving the energy usage for the separation of hydrocarbon components that have similar boiling points through distillation.

### BACKGROUND OF THE INVENTION

The separation of hydrocarbons is a basic process in the petroleum industry. Petroleum is a mixture of many hydrocarbon compounds and the compounds are separated and used for different purposes, such as fuel, lubricants, feedstock to polymer plants, etc. One method of separation in the petroleum industry is distillation. Distillation is a method of separation that is based on a difference in the relative volatilities of the components in a mixture, and therefore differences in the composition between a liquid mixture and a vapor formed from the liquid mixture. In a standard continuous distillation process involving multiple stages, the differences in composition allows for partial separation at each stage. The liquid and vapor phases are passed to different stages, and further produce new liquid and vapor phases in each having different compositions.

Document US 5,124,004 and DE 1114168 disclose distillation columns with compression of a vapor draw from the column to reuse heat.

A problem exists for distillation systems in that they are large consumers of energy and inefficient with respect to energy usage and consumption. Improvements in design can significantly reduce energy consumption. With increasing energy costs and with increasing pressures to reduce CO₂ emissions associated with energy consumption, there is a compelling need for more efficient distillation designs.

### SUMMARY OF THE INVENTION

The present invention provides for a more efficient energy usage in the distillation of a mixture. The distillation improvement provides for increasing the purity of the bottoms product while reducing the amount of external energy added to reboil the bottoms stream to create the vapor for stripping the lighter components from the bottoms stream.

The apparatus of the present invention includes the features of claim 1.

Other objects, advantages and applications of the present invention will become apparent to those skilled in the art from the following detailed description and drawings.

### BRIEF DESCRIPTION OF THE DRAWINGS

Figure 1 shows a diagram of an embodiment of the invention;
Figure 2 shows a diagram of an embodiment with an additional heat pump compressor for compressing the overhead vapor stream;
Figure 3 shows a diagram for an alternate embodiment with flashing of the bottoms liquid; and
Figure 4 shows an alternate diagram for the embodiment with flashing of the bottoms liquid.

### DETAILED DESCRIPTION OF THE INVENTION

The separation of fluids is well known in art, and separation by distillation is a common means for separating two or more liquids. A distillation process operates on the principle of different liquid components in a mixture have different volatilities, and therefore will develop an equilibrium where for the more volatile component, the vapor phase has a higher concentration relative to that components concentration in the liquid phase.

In a continuous distillation process, the basic equipment comprises a distillation column having a plurality of plates, an overhead condenser, and a bottoms reboiler. In general the distillation column is a vertically oriented, cylindrical vessel and comprises an inlet for admitting the fluid to be separated, a rectifying section that is above the inlet, and a stripping section that is below the fluid. The plates are typically sieve trays or bubble cap trays, or other trays that allow the liquid to flow across and the vapor to percolate upward through the tray.

During the distillation process there is a vapor phase that moves up the column and a liquid phase that moves down the column. The liquid flows across the plates and down to subsequent plates while the vapor passes through the plates to contact the liquid. This provides a shift in the equilibrium, and therefore composition in the phases as one moves up or down the column. At the bottom of the column, the liquid is partially reboiled to create the vapor stream that continuously moves up through the column, with the remainder drawn off as a bottoms product stream. At the top of the column the vapor is condensed and a portion is directed back into the column to provide a continuous liquid stream passing down through the column, with the remainder drawn off as condensate, or distillate.

However, distillation can be energy intensive, and can require many stages, or plates, depending on the properties of the components in the mixture to be separated. This is important for mixtures of liquids that have close boiling points, due to increasing the number of stages to effect a desired separation.

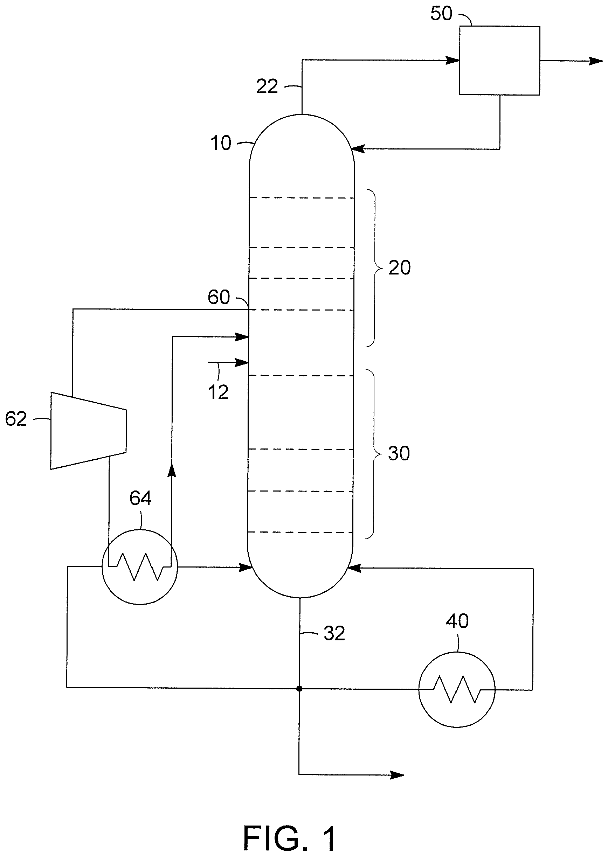

When the bottoms product has a high purity requirement, energy can be saved by compressing intermediate vapors streams from the rectifying section to reboil the bottoms stream. The present invention provides for an efficient reboiling of the bottoms stream. An apparatus for a distillation separation is shown in Figure 1. The apparatus includes a distillation column 10 with a feed inlet 12, a rectifying section 20 disposed above the feed inlet 12 and having an outlet 22 for an overhead vapor stream, and a stripping section 30 disposed below the feed inlet 12 and having an outlet 32 for a bottoms liquid stream. The apparatus further includes a bottoms reboiler 40 for reboiling the bottoms liquid stream, and an overhead condensing section 50 for condensing the overhead vapor stream. The apparatus further includes a side vapor draw 60 from the rectifying section 20. The side vapor draw 60 is passed to heat pump compressor 62, where the vapor from the side vapor draw 60 is compressed. The compressed vapor is passed to the vapor side of a second reboiler heat exchanger 64. A portion of the bottoms liquid is passed to the liquid side of the second reboiler heat exchanger 64. The bottoms liquid is reboiled to produce a vapor and fed to the bottom of the stripping section 30 of the distillation column 10. The compressed vapor will be preferably condensed, and the condensed vapor from the reboiler heat exchanger 64 is directed to an inlet in the rectifying section 20 of the distillation column 10.

For efficiency, when the apparatus is for producing a bottoms product having a high purity requirement, the rectifying section 20 can be reduced in size by withdrawing vapor through the side vapor draw 60, and the side vapor draw 60 can be positioned above the lowest tray in the rectifying section 20. The feed is allowed to separate into liquid and vapor from the feed, and drawing a portion of the vapor flowing through the rectification section 20, reduces the volume flow of vapor and liquid through the rectifying section 20 above the side vapor draw. By drawing off an intermediate stream for compression, the compression ratio is reduced and saves energy through operation of a compressor at lower severity.

Through the use of compressing intermediate vapor streams to reboil the bottoms, there will be a significant decrease in the external energy required for a distillation column. Compressing the intermediate vapor streams will reduce the compression ratio, and provide energy savings from reduced utilities. For vapor streams from the top of the column, the composition will differ and there will be a greater compression ratio. This invention will be especially useful for separation of similar components having close boiling points. For example, in the separation of a propane/propylene mixture, the distillation is carried out at elevated pressures and due to the similar properties, a high degree of separation would require a large number of stages, or trays, in a distillation column. The use of compressing intermediate streams drawn off from the rectifying section can provide a significant amount of energy for reboiling of the bottoms stream. If only a propane stream needs to be purified, the rectifying section can be smaller and compressed streams drawn off from the rectifying section will have heat sufficient to reboil a portion of the bottoms.

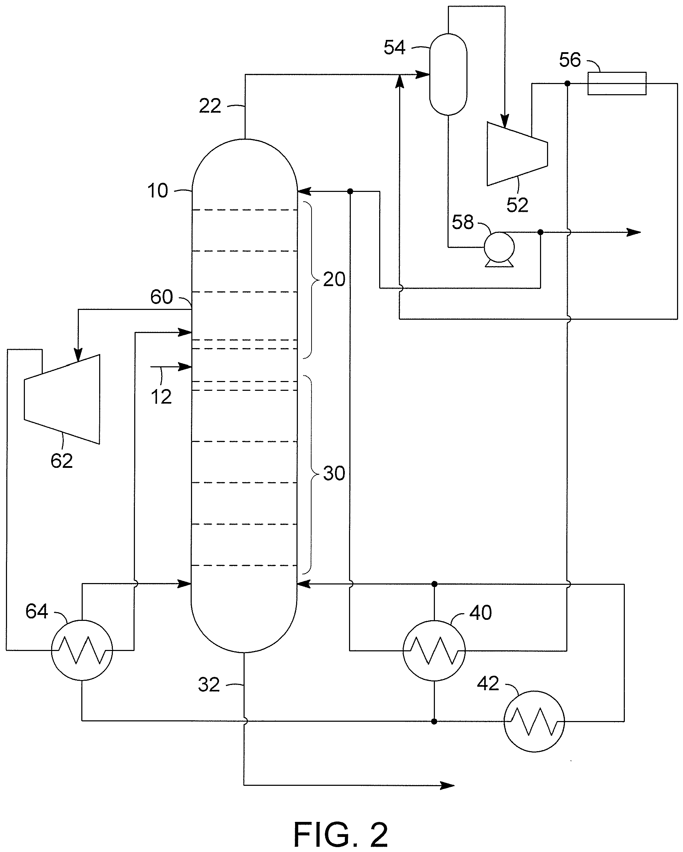

In the invention, as shown in Figure 2, the apparatus further includes a second heat pump compressor 52 for compressing the overhead vapor stream. The overhead vapor stream passes to a vapor-liquid separator 54, where the vapor is directed to the compressor 52. A portion of the liquid from the vapor-liquid separator is directed to product, while a second portion is directed to liquid reflux in the column 10. In this embodiment, the bottoms reboiler 40 is a reboiler heat exchanger, the compressed overhead vapor stream passes on the vapor side of the heat exchanger, and a portion of the bottoms liquid passes on the liquid side of the heat exchanger reboiler 40. The compressed vapor is at least partly condensed, and redirected to the top of the column 10. The condensed liquid is under pressure, and passes through a pressure reducing valve where upon entry to the top of the rectifying section 20 of the column 10, the liquid partially flashes. The condensed liquid can enter a separate port at the top of the rectifying section, or can enter through the reflux entry port. The vapor exits the outlet 22 of the rectifying section 20 and the liquid is used as a reflux for the rectifying section 20. Excess condensed liquid from the vapor-liquid separator 54 is pumped via a pump 58 to storage, or other operational units within a petrochemical plant.

The apparatus further includes a third reboiler 42, also known as a trim reboiler. The third reboiler 42 provides additional heat when there is insufficient heat from the first reboiler heat exchanger 40 and the second reboiler heat exchanger 64.

A portion of the compressed overhead vapor stream can be passed through a trim condenser 56. This portion is condensed and passed to the vapor-liquid separator after passing through a pressure reducing valve to the lower pressure of the vapor-liquid separator. The condensed liquid will partially flash and the remaining liquid will contribute to the reflux in the column 10.

The use of a trim condenser 56 will depend on the amount of compressed overhead vapor that is not needed to be passed to the reboiler 40. This is determined by the heat load requirements of the reboiler 40 and the amount of compressed overhead vapor to be condensed.

The invention also provides for a process of separating a less volatile component in a mixture when the bottoms product has a high purity requirement. By using a heat pump compressor, intermediate vapor streams can be used to provide the heat to reboil the bottoms stream for the distillation column. The process comprises passing a mixture to a feed section of a distillation column, having a rectifying section above the feed section and a stripping section below the feed section. The process generates an overhead vapor stream and a bottoms stream. A portion of the overhead vapor stream is condensed, thereby created a condensed overhead stream. A portion of the condensed overhead stream is passed to the top of the rectifying section as reflux for the distillation process. A portion of the bottoms stream is passed to a first reboiler where the stream is at least partially vaporized and the vaporized bottoms stream is passed to the bottom of the stripping section.

The process further comprises drawing of a side vapor stream from an intermediate stage of the rectifying section, and passing the side vapor stream to a heat pump compressor where the vapor stream is compressed to form a compressed side vapor stream. The compressed side vapor stream is passed to the vapor side of a second reboiler heat exchanger, and is used to reboil a portion of the bottoms stream which is passed to the liquid side of the second heat exchanger. The bottoms stream is reboiled to produce a vapor stream and passed to the bottom of the stripping section. The compressed side vapor stream is cooled and partially or wholly condensed, and passed to an inlet port in the rectifying section of the column. The condensed compressed side vapor stream passes through a pressure reducing valve and partially flashes as it is passed to the distillation column, thereby creating a side feed stream that is partially liquid and partially vapor.

In an alternative embodiment of the process, the overhead vapor stream is passed to a vapor-liquid separator, thereby creating a vapor stream and a liquid stream for use as reflux. The vapor stream is passed to an overhead heat pump compressor creating a compressed overhead vapor stream. The compressed overhead vapor stream is heated as a result of the compression and is used for reboiling a portion of the bottoms stream. In this embodiment, the first reboiler is a heat exchanger where the compressed overhead vapor stream is passed to the vapor side of the heat exchanger. A portion of the bottoms stream is passed to the liquid side of the first reboiler and a portion of the bottoms stream is vaporized to create a bottoms vapor stream. The bottoms vapor stream is then passed to the bottom of the stripping section. The compressed overhead vapor stream is cooled and a portion of the stream condenses. Preferably, the first reboiler is sized and operated at conditions to condense all of the compressed overhead vapor stream.

The condensed overhead vapor stream is at an elevated pressure and passes through a pressure reducing valve before passing to the top of the rectifying section of the column. The condensed stream will flash as it is passed to the column and a portion of the liquid from the flash will provide a reflux stream for the rectifying section. The vapor that is generated from the flashed condensed stream is passed to the vapor-liquid separator.

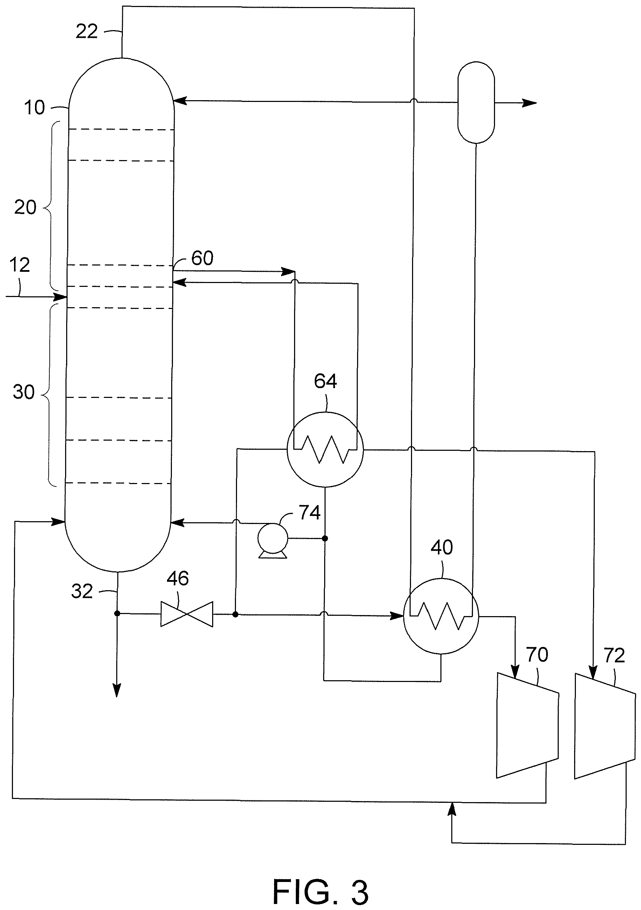

In an alternate non-claimed embodiment, the improved purification of the bottoms stream involves the reducing of the pressure of the bottoms stream and reboiling the reduced pressure bottoms stream to produce a bottoms vapor stream. As shown in Figure 3, the apparatus comprises a distillation column 10 having a rectifying section 20 with an outlet 22 for an overhead vapor stream, a stripping section 30 with an outlet 32 for a bottoms liquid stream, and a feed section with a feed inlet 12 disposed between the rectifying section 20 and the stripping section 30. The apparatus further includes a reboiler section, where the reboiler section includes a means 46 for reducing the pressure of the liquid bottoms stream, a first reboiler 40 having a liquid side in fluid communication with the reduced pressure bottoms stream, and a vapor side in fluid communication with the overhead vapor stream, and a first heat pump compressor 70 in fluid communication with the first reboiler liquid side. The overhead vapor stream which is condensed in the first reboiler 40 is passed to a vapor-liquid separation drum and is in fluid communication with the top of the rectifying section 20.

The apparatus further includes a side draw 60 for drawing off a vapor stream from the rectifying section 20. The side vapor draw is in fluid communication with the vapor side of a second reboiler 64. The liquid side of the second reboiler 64 is in fluid communication with a reduced pressure liquid bottoms stream. The reduced pressure liquid bottoms stream can be drawn from the already reduced pressure liquid bottoms stream passing through the pressure reducing means 46, or can be a separate portion of the liquid bottoms stream that is passed through a second pressure reducing means (not shown). A second heat pump compressor 72 is in fluid communication with the reboiled bottoms stream, and generates a compressed bottoms vapor stream that is passed to the bottom of the stripping section 30.

The pressure reducing means 46 can be a Joule-Thompson valve, or any other means for reducing the pressure of the bottoms liquid stream. Other means includes passing the liquid through a turbine to drive a motor and recover some of the energy expended in the process of reducing the pressure.

The process for this embodiment comprises passing a mixture to the feed section of the distillation column 10. The distillation column 10 is operated to create a vapor stream flowing up through the column 10 and a liquid stream flowing down through the column, with an overhead vapor stream leaving the outlet 22 of the rectifying section 20 and a bottoms liquid stream leaving the outlet 32 of the stripping section 30. A portion of the liquid bottoms stream is passed through a pressure reducing means 46 and creating a reduced pressure bottoms stream. The reduced pressure bottoms stream is passed to a first reboiler 40 on the liquid side of the reboiler. The overhead vapor stream is passed to the vapor side of the first reboiler 40. The overhead vapor stream condenses thereby generating a condensed stream, and the reduced pressure bottoms stream vaporizes thereby creating a bottoms vapor stream. The condensed overhead stream is passed to the top of the rectifying section 20 as reflux.

The reduced pressure bottoms stream is reboiled in the reboiler 40, and generates a bottoms vapor stream. Any liquid from the reduced pressure bottoms stream not reboiled is separated and collected and redirected back to the bottom of the stripping section 30. Since the liquid is at a reduced pressure, the liquid pressure is increased by a pump 74 to a pressure sufficient to deliver the liquid to the stripping section 30. Liquid-vapor separation of the reboiled liquid is to prevent liquid from going to the heat pump compressors 70, 72. The bottoms vapor stream is compressed with a heat pump compressor 70, thereby creating a compressed bottoms vapor stream. The bottoms vapor stream is passed to the bottom of the stripping section 30 to provide heat and vapor to strip out more volatile components from the fluid flowing down the distillation column 10.

A second portion of the liquid bottoms stream is passed through a means for reducing the pressure of the liquid. The second portion can have a separate pressure reducing means, such as a separate valve, or can be drawn off from the first portion of the bottoms liquid after the first portion has passed through the means for reducing pressure. A second pressure reducing means provides for control of the temperature driving force needed to transfer heat and thereby reboil the second portion of the liquid bottoms stream. The second portion passes through a second reboiler 64 where the second portion is vaporized to form a second bottoms vapor stream. Any of the second portion of the liquid bottoms stream that is not vaporized is separated and collected, and pumped back to the bottom of the stripping section 30 through a pump 74. The second bottoms vapor stream is compressed by a second heat pump compressor 72, thereby creating a second compressed bottoms vapor stream. The second compressed bottoms vapor stream is then passed to the bottom of the stripping section 30 to add additional vapor for the distillation process. The remainder of the liquid bottoms stream is a bottoms product that has a higher purity.

A vapor side stream is drawn from a side port 60 in the distillation column 10 and is passed through the vapor side of the second reboiler 64, where the vapor side stream condenses. The condensed side stream is then passed to the distillation column 10 as a side liquid feed. It is preferred that the vapor side stream is drawn near the bottom of the rectifying section 10.

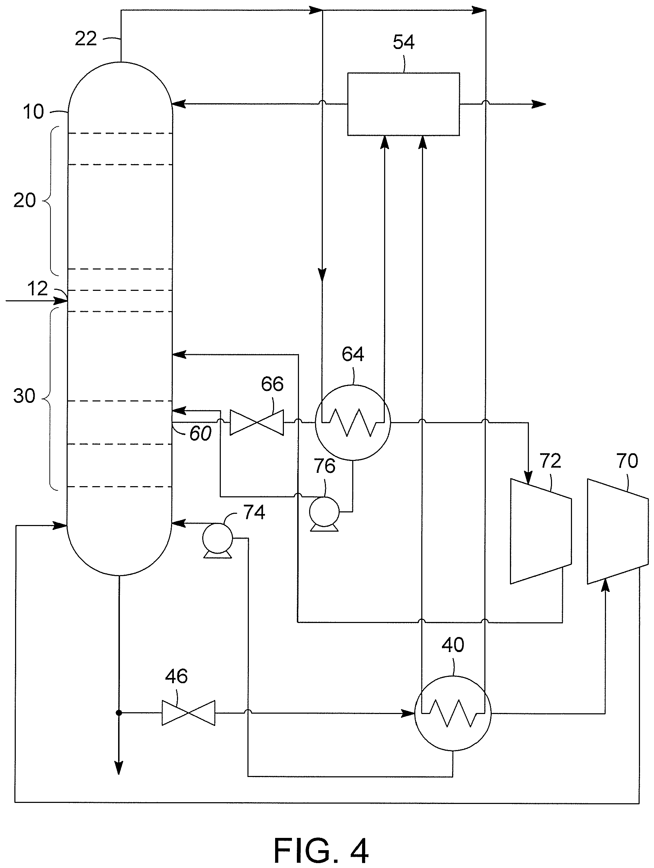

Another variation of this non-claimed embodiment is shown in Figure 4. The apparatus comprises the distillation column 10 having a rectifying section 20 and a stripping section 30. The apparatus further comprises a first means 46 for reducing the pressure of the liquid bottoms stream, and a first reboiler 40 having a liquid side in fluid communication with the reduced pressure liquid bottoms stream. A portion of the overhead vapor stream is passed to the vapor side of the first reboiler 40, where the overhead vapor stream condenses and the liquid bottoms stream is vaporized. Any of the liquid bottoms stream not vaporized is separated and collected, and pumped back to the bottom of the stripping section 30. A pump 74 increases the liquid pressure to at least the pressure of the bottom of the stripping section 30 for unvaporized liquid collected from the first reboiler 40. The vaporized bottoms stream is compressed with a heat pump compressor 70, thereby generating a compressed vapor stream and is passed to the bottom of the stripping section 30. The condensed overhead vapor stream is passed to the top of the rectifying section 20 as reflux. Preferably, the condensed overhead vapor stream is first passed to a vapor-liquid separation tank 54. The tank 54 collects the liquid and sends a portion out as overhead distillate, while returning the remainder to the top of the rectifying section 20.

The apparatus further includes a port 60 for drawing off an intermediate liquid stream from the column 10. Preferably, the port 60 is in the stripping section 30 of the column. The intermediate liquid stream is passed through a second pressure reducing means 66 and generating a reduced pressure intermediate liquid stream. The reduced pressure intermediate liquid stream is in fluid communication with the liquid side of a second reboiler 64, where at least a portion of the liquid is vaporized. Any of the intermediate liquid stream that is not vaporized is separated and collected and returned to the stripping section 30. The liquid portion from the second reboiler 64 that is not vaporized is passed through a second pump 76 to a pressure sufficient to return the liquid to the column 10. The liquid portion not vaporized can be returned to the stripping section at or below the liquid draw off port 60. In one embodiment, it is returned with the liquid recovered from the first reboiler. A second portion of the overhead vapor stream is passed to the vapor side of the second reboiler 64, where the second portion is at least partially condensed. The vaporized intermediate stream is compressed with a second heat pump compressor 72, and the compressed intermediate vapor is returned to the column 10. Preferably, the vapor is returned to a position in the column 10 above the tray where the intermediate liquid stream is drawn from the port 60. The condensed overhead vapor stream is in fluid communication with the top of the rectifying section, where the condensed stream will be returned as reflux.

The process comprises using the overhead vapor stream to reboil the liquid bottoms stream and an intermediate liquid stream. The liquid streams are passed through pressure reducing means and will vaporize at lower temperatures. The vaporized streams are then compressed, where the vapor is heated through the compression. The heated and compressed vapor is then passed back to the distillation column to provide the upflowing vapor for stripping the downflowing liquid.

In this embodiment, a mixture is passed to the feed section of the distillation column. The distillation column has an outlet at the top of the rectifying section 20 for an overhead vapor stream, and an outlet at the bottom of the stripping section 30 for a liquid bottoms stream. A portion of the bottoms stream is passed through a pressure reducing valve 46 to a first reboiler 40, where it exchanges heat with a portion of the overhead vapor stream. The bottoms stream is vaporized and the overhead vapor stream is condensed. The vaporized bottoms stream is compressed with a heat pump compressor 70, creating a compressed and heated bottoms vapor stream. The bottoms vapor stream is passed to the bottom of the stripping section 30 for providing heat to strip out components from liquid flowing down through the column 10. The condensed overhead vapor stream is passed to the top of the rectifying section 20 as reflux.

The process further comprises drawing off a liquid stream from an intermediate port 60 in the column 10 and passing the intermediate liquid stream through a pressure reducing valve 66 to produce a reduced pressure intermediate liquid stream, which is passed to a second reboiler 64. The reduced pressure liquid stream is heat exchanged with a second portion of the overhead vapor stream, where the reduced pressure liquid stream is vaporized and the overhead vapor stream is condensed.

The reboiled intermediate vapor stream is compressed with a second heat pump compressor 72 and passed to an intermediate inlet port in the column 10. Preferably, the vapor is passed to above the tray where the intermediate liquid is drawn out of the port 60 in the column. The second condensed portion of the overhead vapor stream is passed to the top of the rectifying section 20 as additional reflux.

By using the heat from the compressed intermediate stream, energy is more efficiently used in the distillation process, and this can further reduce the size of the distillation column below the intermediate draw as there is lower vapor and liquid flow through the stripping section below the intermediate draw.

## Claims

1. An apparatus for the distillation separation of a first component from a mixture comprising:
a distillation column (10) comprising a rectifying section (20) having an outlet for an overhead vapor stream, a stripping section (30) having an outlet for a bottoms liquid stream, and feed section having a feed inlet (12) and disposed between the rectifying section (20) and the stripping section (30);
a bottoms reboiler section for reboiling the bottoms liquid stream entering from the stripping section (30);
an overhead condensing section (50) for condensing the overhead vapor stream from the rectifying section (20);
a side vapor draw (60) from the rectifying section (20);
a heat pump compressor (62) having an inlet in fluid communication with the side vapor draw (60), and an outlet; and
a reboiler heat exchanger (64) having a fluid side in fluid communication with the bottoms stream from the stripping section (30), and having a vapor side in fluid communication with the outlet from the heat pump compressor (62);
the apparatus further comprising a second heat pump compressor (52) having an inlet in fluid communication with the overhead vapor stream, and an outlet thereby generating an overhead compressed vapor stream;
wherein the bottom reboiler section comprises a heat exchanger (40) having fluid side in fluid communication with the bottoms stream from the stripping section, and having a vapor side in fluid communication with the overhead compressed vapor stream;
wherein the apparatus is configured such that the overhead compressed vapor is at least partly condensed in the heat exchanger (40) having a vapor side in fluid communication with the overhead compressed vapor stream and redirected to the top of the column; and
the apparatus further comprising a side inlet to the rectifying section (20) and wherein the heat pump compressor outlet is in fluid communication with the side inlet to the rectifying section (20);
wherein the side inlet is disposed below the side vapor draw (60).

2. The apparatus of claim 1 further comprising a condenser (56) having an inlet in fluid communication with the second heat pump (52) outlet, and for condensing a portion of the overhead compressed vapor stream.

3. The apparatus of claim 2 wherein the condenser (56) is a trim condenser.

4. The apparatus of claim 1 further comprising a vapor-liquid separation tank (54) for separating having an inlet in fluid communication with the rectifying section (20) outlet, and an outlet in fluid communication with the second heat pump compressor (52) inlet.

5. The apparatus of claim 1 further comprising a third reboiler (42) for reboiling additional liquid from the bottoms stream.

6. The apparatus of claim 1 wherein the side vapor draw (60) is positioned above the lowest tray of the rectifying section (20).

## Patentansprüche

1. Apparat zum destillativen Trennen einer ersten Komponente von einer Mischung, umfassend:
eine Destillierkolonne (10), die einen Rektifizierabschnitt (20) mit einem Auslass für einen Überkopf-Dampfstrom, einen Strippabschnitt (30) mit einem Auslass für einen Sumpfprodukt-Flüssigstrom und einen Einsatzmaterialabschnitt mit einem Einsatzmaterialeinlass (12) umfasst, der zwischen dem Rektifizierabschnitt (20) und dem Strippabschnitt (30) angeordnet ist;
einen Sumpfprodukt-Reboilerabschnitt zum Aufkochen des Sumpfprodukt-Flüssigstroms, der aus dem Strippabschnitt (30) eingeht;
einen Überkopf-Kondensierabschnitt (50) zum Kondensieren des Überkopf-Dampfstroms aus dem Rektifizierabschnitt (20);
einen Seitendampfabzug (60) aus dem Rektifizierabschnitt (20);
einen Wärmepumpenkompressor (62) mit einem Einlass in Fluidkommunikation mit dem Seitendampfabzug (60) und einem Auslass; und
einem Reboiler-Wärmetauscher (64) mit einer Fluidseite in Fluidkommunikation mit dem Sumpfprodukt-Strom aus dem Strippabschnitt (30) und mit einer Dampfseite in Fluidkommunikation mit dem Auslass aus dem Wärmepumpenkompressor (62);
wobei der Apparat ferner einen zweiten Wärmepumpenkompressor (52) mit einem Einlass in Fluidkommunikation mit dem Überkopf-Dampfstrom und einem Auslass umfasst, wodurch ein komprimierter Überkopf-Dampfstrom erzeugt wird;
wobei der Sumpfprodukt-Reboilerabschnitt einen Wärmetauscher (40) mit einer Fluidseite in Fluidkommunikation mit dem Sumpfprodukt-Strom aus dem Strippabschnitt und mit einer Dampfseite in Fluidkommunikation mit dem komprimierten Überkopf-Dampfstrom umfasst;
wobei der Apparat so ausgestaltet ist, dass der komprimierte Überkopf-Dampf mindestens teilweise in dem Wärmetauscher (40) kondensiert wird, der eine Dampfseite in Fluidkommunikation mit dem komprimierten Überkopf-Dampfstrom aufweist, und zum oberen Bereich der Säule umgeleitet wird; und
der Apparat ferner einen Seiteneinlass zu dem Rektifizierabschnitt (20) umfasst, und wobei der Wärmepumpenkompressorauslass in Fluidkommunikation mit dem Seiteneinlass zu dem Rektifizierabschnitt (20) ist;
wobei der Seiteneinlass unterhalb des Seitendampfabzugs (60) angeordnet ist.

2. Apparat nach Anspruch 1, ferner umfassend einen Kondensierer (56) mit einem Einlass in Fluidkommunikation mit dem Auslass der zweiten Wärmepumpe (52) und zum Kondensieren eines Teils des komprimierten Überkopf-Dampfstroms.

3. Apparat nach Anspruch 2, wobei der Kondensierer (56) ein Trimmkondensierer ist.

4. Apparat nach Anspruch 1, ferner umfassend einen Dampf-Flüssig-Trenntank (54) zum Trennen mit einem Einlass in Fluidkommunikation mit dem Auslass des Rektifizierabschnitts (20) und einem Auslass in Fluidkommunikation mit dem Einlass des zweiten Wärmepumpenkompressors (52).

5. Apparat nach Anspruch 1, ferner umfassend einen dritten Reboiler (42) zum Aufkochen von zusätzlicher Flüssigkeit aus dem Sumpfprodukt-Strom.

6. Apparat nach Anspruch 1, wobei der Seitendampfabzug (60) oberhalb des untersten Bodens des Rektifizierabschnitts (20) positioniert ist.

## Revendications

1. Appareil pour la séparation par distillation d'un premier composant d'un mélange comprenant :
une colonne de distillation (10) comprenant une section de rectification (20) ayant un orifice de refoulement pour un flux de vapeur de produits de tête, une section d'épuisement (30) ayant un orifice de refoulement pour un flux de liquide de produits de fond, et une section d'alimentation ayant un orifice d'admission d'alimentation (12) et disposée entre la section de rectification (20) et la section d'épuisement (30) ;
une section de rebouilleur de produits de fond pour le rebouillage du flux de liquide de produits de fond entrant depuis la section d'épuisement (30) ;
une section de condensation de produits de tête (50) pour la condensation du flux de vapeur de produits de tête depuis la section de rectification (20) ;
une aspiration de vapeur de côté (60) depuis la section de rectification (20) ;
un compresseur de pompe à chaleur (62) ayant un orifice d'admission en communication fluidique avec l'aspiration de vapeur de côté (60), et un orifice de refoulement ; et
un échangeur de chaleur de rebouilleur (64) ayant un côté fluide en communication fluidique avec le flux de produits de fond depuis la section d'épuisement (30), et ayant un côté vapeur en communication fluidique avec l'orifice de refoulement depuis le compresseur de pompe à chaleur (62) ;
l'appareil comprenant en outre un second compresseur de pompe à chaleur (52) ayant un orifice d'admission en communication fluidique avec le flux de vapeur de produits de tête, et un orifice de refoulement générant ainsi un flux de vapeur comprimée de produits de tête ;
dans lequel la section de rebouilleur de produits de fond comprend un échangeur de chaleur (40) ayant un côté fluide en communication fluidique avec le flux de produits de fond depuis la section d'épuisement, et ayant un côté vapeur en communication fluidique avec le flux de vapeur comprimée de produits de tête ;
dans lequel l'appareil est configuré de sorte que la vapeur comprimée de produits de tête soit au moins en partie condensée dans l'échangeur de chaleur (40) ayant un côté vapeur en communication fluidique avec le flux de vapeur comprimée de produits de tête et redirigée vers le haut de la colonne ; et
l'appareil comprenant en outre un orifice d'admission de côté vers la section de rectification (20) et dans lequel l'orifice de refoulement du compresseur de pompe à chaleur est en communication fluidique avec l'orifice d'admission de côté vers la section de rectification (20) ;
dans lequel l'orifice d'admission de côté est disposé en dessous de l'aspiration de vapeur de côté (60).

2. Appareil selon la revendication 1, comprenant en outre un condenseur (56) ayant un orifice d'admission en communication fluidique avec l'orifice de refoulement de la seconde pompe à chaleur (52), et pour la condensation d'une portion du flux de vapeur comprimée de produits de tête.

3. Appareil selon la revendication 2, dans lequel le condenseur (56) est un condenseur d'appoint.

4. Appareil selon la revendication 1, comprenant en outre une cuve de séparation vapeur-liquide (54) pour la séparation ayant un orifice d'admission en communication fluidique avec l'orifice de refoulement de la section de rectification (20), et un orifice de refoulement en communication fluidique avec l'orifice d'admission du second compresseur de pompe à chaleur (52).

5. Appareil selon la revendication 1, comprenant en outre un troisième rebouilleur (42) pour le rebouillage de liquide supplémentaire depuis le flux de produits de fond.

6. Appareil selon la revendication 1, dans lequel l'aspiration de vapeur de côté (60) est positionnée au-dessus du plateau le plus bas de la section de rectification (20).
